# FASCICULE DE BREVET EUROPEEN

(11) **EP 3 507 171 B1**
(45) Date de publication et mention de la délivrance du brevet: **30.09.2020**
(21) Numéro de dépôt: 17758599.9
(22) Date de dépôt: 04.08.2017
(51) Int. Cl.: B62D 21/15, B62D 25/20

(54) **VÉHICULE UTILITAIRE AVEC RENFORTS CONTRE CHOCS LATÉRAUX**
NUTZFAHRZEUG MIT VERSTÄRKUNGEN GEGEN SEITENAUFPRALL
UTILITY VEHICLE WITH REINFORCEMENTS AGAINST SIDE IMPACTS

(30) Priorité: 01.09.2016 FR 1658108
(43) Date de publication de la demande: 10.07.2019
(73) Titulaire: PSA Automobiles SA, 78300 Poissy (FR)
(72) Inventeur: BENANE, Said, 94550 Chevilly Larue (FR)
(86) Numéro de dépôt international: PCT/FR2017/052194
(87) Numéro de publication internationale: WO 2018/042098

(56) Documents cités:
- EP-A2- 0 431 734
- DE-A1-102009 015 155
- GB-A- 2 427 176
- US-A1- 2006 087 107
- US-A1- 2011 298 245
- US-B2- 7 896 115

## Description

L'invention a trait au domaine des véhicules automobiles. Plus précisément, l'invention a trait au domaine des véhicules utilitaires.

Le document de brevet publié US 8,979,173 B2 divulgue une structure de plancher de véhicule automobile. La structure comprend un plancher et deux longerons latéraux qui s'étendent chacun le long d'un côté du plancher. La structure comprend également deux longerons intermédiaires qui s'étendent sur le plancher entre les longerons latéraux. La structure comprend deux renforts, chaque renfort étant fixé à l'avant du plancher, transversalement entre un longeron latéral et un longeron intermédiaire de manière à renforcer la structure de plancher, notamment en cas de choc latéral.

Le document de brevet publié US 7,896,115 B2 divulgue une structure de plancher de véhicule automobile comprenant un plancher, deux longerons latéraux s'étendant le long du plancher et deux longerons intermédiaires s'étendant entre les longerons latéraux. La structure comprend deux renforts sous forme de traverses qui s'étendent transversalement sous le plancher entre les longerons latéraux, vers l'avant et l'arrière du véhicule.

Le document de brevet publié WO 2012/098630 A1 divulgue une structure de véhicule automobile comprenant un longeron latéral renforcé par un renfort ajouré fixé sur une surface extérieure dudit longeron latéral. Le renfort permet d'améliorer la rigidité de la structure en cas de choc.

Les renforts divulgués dans l'état de l'art concernent essentiellement les planchers de véhicules automobiles et ne sont pas adaptés aux véhicules utilitaires qui présentent une structure particulière en raison de la présence d'une partie spécifiquement destinée au chargement.

L'invention a pour objectif de résoudre au moins un des inconvénients de l'art antérieur susmentionné. L'invention a plus particulièrement pour objectif de proposer un véhicule utilitaire comprenant des renforts permettant de limiter les déformations du véhicule en cas de choc latéral. Plus précisément, l'invention a pour objectif de fournir un véhicule utilitaire assurant la sécurité des passagers en cas de choc latéral.

L'invention a également pour objectif de procurer une solution simple, robuste et économique.

L'invention a pour objet un véhicule utilitaire comprenant une partie avant avec une cabine ; une partie arrière de chargement ; un plancher et deux longerons latéraux, les deux longerons étant chacun d'un côté distinct du plancher, ledit plancher et lesdits longerons s'étendant longitudinalement le long des parties avant et arrière ; un tel véhicule est connu du document GB 2 427 176, qui divulgue le préambule de la première revendication.

L'invention est remarquable en ce que le véhicule comprend, en outre, des éléments de renfort du plancher et des longerons en cas de choc latéral, lesdits éléments étant disposés transversalement sous une portion du plancher située à cheval sur les parties avant et arrière, lesdits éléments étant dimensionnés pour présenter une plus grande résistance à la déformation, en cas de choc latéral, sur la partie avant que sur la partie arrière.

Selon des modes particuliers de réalisation, le véhicule utilitaire peut comprendre une ou plusieurs des caractéristiques suivantes, prises isolément ou selon toutes les combinaisons techniquement possibles :
- Le véhicule utilitaire comprend deux longerons intermédiaires disposés longitudinalement sous le plancher entre les deux longerons latéraux, les éléments de renfort étant disposés entre les longerons latéraux et les longerons intermédiaires.
- Le véhicule utilitaire comprend des traverses disposées transversalement sous le plancher entre les longerons intermédiaires sur la portion du plancher située à cheval sur les parties avant et arrière.
- Les éléments de renfort présentent un profil général en forme de gousset.
- Les éléments de renfort comprennent plusieurs éléments distincts disposés, latéralement, de chaque côté du plancher et fixés aux longerons latéraux.
- Les éléments de renfort disposés sur la partie arrière sont généralement plans et les éléments de renfort disposés sur la partie avant forment des caissons.
- Les éléments de renfort sont au nombre de quatre, ou plus, latéralement de chaque côté du plancher, la raideur en compression lors d'un choc latéral de chacun de ces éléments augmentant progressivement suivant une direction longitudinale orientée de la partie arrière vers la partie avant.
- Au moins deux des au moins quatre éléments de renfort latéralement de chaque côté du plancher sont situés sur la partie avant et au moins deux autres desdits au moins quatre éléments de renfort sont situés sur la partie arrière.
- Les traverses sont situées, longitudinalement, au niveau des éléments de renfort.
- La portion du plancher comprenant les éléments de renfort s'étend longitudinalement sur une distance comprise entre 200 et 800 mm, préférentiellement entre 300 et 700 mm, plus préférentiellement entre 400 et 700mm, sur chacune des parties avant et arrière.
- La partie arrière forme au niveau du plancher une surface de réception d'un aménagement.

L'invention est intéressante en ce que le véhicule utilitaire comprend des éléments de renfort permettant de créer deux zones de raideur en compression différentes en cas de choc latéral sur le véhicule. Les éléments de renfort situés sur la partie avant du véhicule présentent une résistance à la déformation supérieure à ceux présents sur la partie arrière du véhicule, permettant ainsi de limiter les déformations en cas de choc latéral, et plus particulièrement au niveau de la cabine. Ainsi, en cas de choc latéral, les éléments de renfort à l'arrière du véhicule vont se déformer et absorber les efforts dus au choc. De plus, les éléments de renfort sur la partie arrière du véhicule peuvent également présenter une résistance à la déformation décroissante en direction de l'arrière du véhicule, ce qui va permettre une dissipation de l'énergie, due au choc latéral, vers l'arrière du véhicule, et donc à distance de la cabine. L'invention permet ainsi également l'implantation d'un volume de chargement important sur la partie arrière du véhicule sans compromettre la sécurité des passagers en cas de choc latéral.

De manière générale, les modes particuliers de chaque objet de l'invention sont également applicables aux autres objets de l'invention. Dans la mesure du possible, chaque objet de l'invention est combinable aux autres objets.

D'autres caractéristiques et avantages de la présente invention seront mieux compris à l'aide de la description et des dessins parmi lesquels :
- La figure 1 représente un véhicule utilitaire selon l'invention ;
- La figure 2 représente une vue de dessous du véhicule de la figure 1, illustrant des éléments de renfort ;
- La figure 3 est une vue agrandie de la portion centrale de la figure 2.

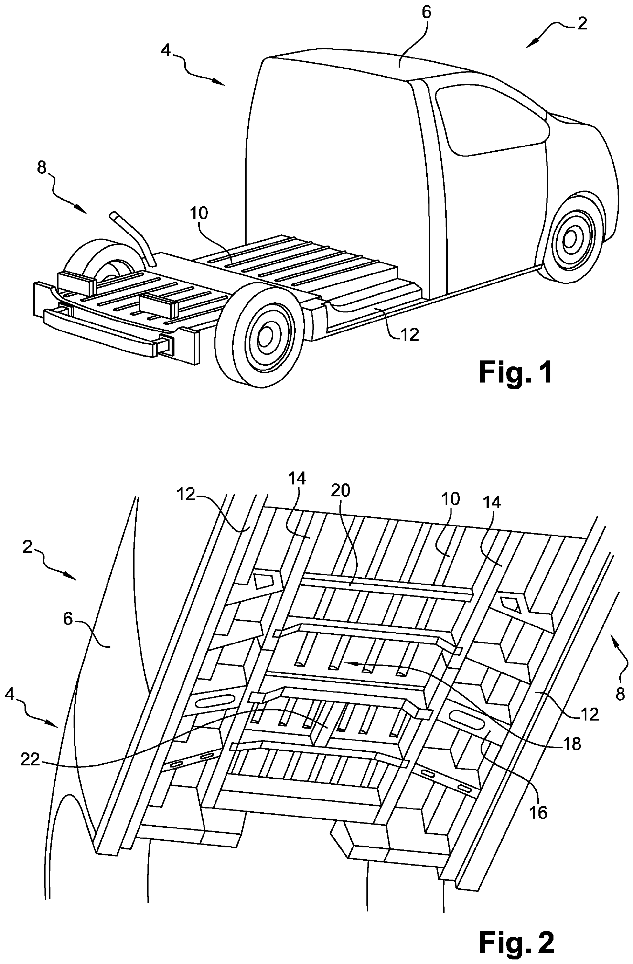

La figure 1 représente un véhicule utilitaire 2. Le véhicule utilitaire comprend une partie avant 4 avec une cabine 6, qui représente l'espace de conduite et une partie arrière 8 de chargement. Le véhicule 2 comprend également un plancher 10 s'étendant le long du véhicule. Le plancher 10 peut s'étendre de la cabine 6 vers l'arrière du véhicule. La partie arrière 8 du véhicule peut former au niveau du plancher 10 une surface de réception d'un aménagement. Le véhicule 2 comprend également deux longerons latéraux 12. Chacun des longerons 12 est d'un côté distinct du plancher 10. Le plancher et les longerons s'étendent longitudinalement le long des parties avant et arrière 4 et 8 du véhicule 2. Un seul longeron 12 est visible sur la figure 1. Le véhicule utilitaire 2 comprend des éléments de renfort (non visibles à la figure 1) du plancher 10 et des longerons 12 en cas de choc latéral.

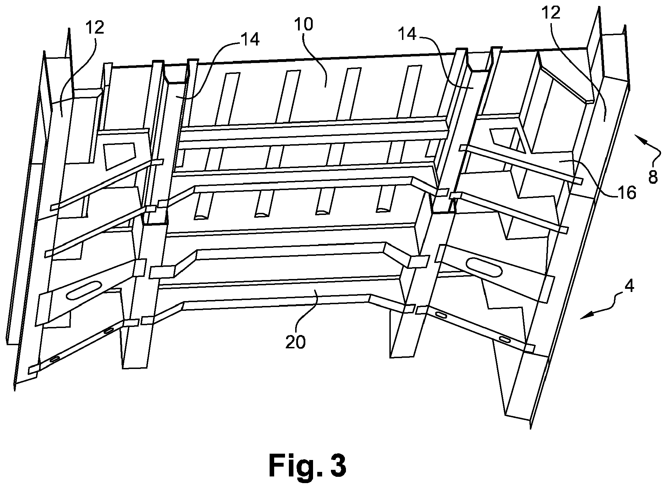

La figure 2 représente une vue de dessous du véhicule utilitaire 2 et la figure 3 est une vue agrandie de la portion centrale de la figure 2. Il est à noter que la portion du plancher 10 de la partie avant 4 du véhicule n'est pas représentée sur la figure 3. On peut observer sur les figures 2 et 3, les parties avant et arrière 4 et 8 et les longerons latéraux 12 du véhicule utilitaire. Le véhicule 2 peut également comprendre deux longerons intermédiaires 14 disposés entre les longerons latéraux.

Les éléments de renfort sont représentés par le signe de référence 16. Les éléments de renfort 16 sont disposés transversalement sous une portion 18 du plancher 10 du véhicule à cheval entre les parties avant et arrière 4 et 8. La portion 18 du plancher 10 comprenant les éléments de renfort 16 peut s'étendre longitudinalement sur une distance comprise entre 200 et 800 mm, préférentiellement entre 300 et 700 mm, plus préférentiellement entre 400 et 700 mm, sur chacune des parties avant et arrière.

Avantageusement, les éléments de renfort 16 peuvent comprendre plusieurs éléments distincts disposés latéralement de chaque côté du plancher 10 et fixés aux longerons latéraux 12. Les éléments de renfort 16 sont préférentiellement disposés entre les longerons latéraux 12 et les longerons intermédiaires 14. Les éléments de renfort 16 sont préférentiellement au nombre de quatre, latéralement de chaque côté du plancher 10, comme représenté sur les figures 2 et 3. Cependant, le nombre d'élément de renfort 16 de chaque côté du plancher 10 peut être supérieur à quatre. Au moins deux des au moins quatre éléments de renfort 16 latéralement de chaque côté du plancher 10 peuvent être situés sur la partie avant 4 et au moins deux autres desdits au moins quatre éléments de renfort 16 peuvent être situés sur la partie arrière 8.

De manière avantageuse, les éléments de renfort 16 présentent chacun un profil général en forme de gousset. Les éléments de renfort 16 sont dimensionnés pour présenter une plus grande résistance à la déformation, en cas de choc latéral, sur la partie avant 4 que sur la partie arrière 8 du véhicule. Avantageusement, la raideur en compression lors d'un choc latéral de chacun de ces éléments 16 augmente progressivement suivant une direction longitudinale orientée de la partie arrière 8 vers la partie avant 4 du véhicule 2. Les éléments de renfort 16 sur la partie arrière 8 peuvent être généralement plans et les éléments de renfort 16 sur la partie arrière peuvent former des caissons. La différence de résistance à la déformation entre les parties avant et arrière 4 et 8 va conduire, en cas de choc latéral, à une déformation de la partie arrière 8 du véhicule avant la partie avant 4, permettant ainsi de limiter les déformations sur la partie avant 4 du véhicule comprenant la cabine.

Le véhicule 2 peut également comprendre des traverses 20 disposées transversalement sous le plancher 10 entre les longerons intermédiaires 14 et sur la portion 18 du plancher à cheval entre les parties avant et arrière 4 et 8. Avantageusement les traverses 20 sont situées longitudinalement au niveau des éléments de renfort 16. Les traverses situées sur la partie avant 4 peuvent être reliées entre elles au moyen d'un élément de liaison 22 (figure 2) fixé à chaque traverse et au plancher.

Afin de faire varier la raideur en compression, les éléments de renfort 16, notamment ceux de la partie arrière 8 peuvent être ajourés de manière à assurer une déformation locale des éléments de renfort. Un des deux éléments de renfort 16 situés sur la partie arrière 8 peut être disposé de façon adjacente au plancher de la partie arrière.

Les éléments de renfort sont avantageusement réalisés en tôle métallique par emboutissage. Ils peuvent être fixés au plancher et aux longerons par des points de soudure à résistance électrique.

## Revendications

1. Véhicule utilitaire (2) comprenant :
- une partie avant (4) avec une cabine (6) ;
- une partie arrière (8) de chargement ;
- un plancher (10) et deux longerons latéraux (12), les deux longerons (12) étant chacun d'un côté distinct du plancher (10), ledit plancher et lesdits longerons s'étendant longitudinalement le long des parties avant et arrière (4;8) ;
**caractérisé en ce que** le véhicule (2) comprend, en outre :
- des éléments de renfort (16) du plancher (10) et des longerons (12) en cas de choc latéral, lesdits éléments (16) étant disposés transversalement sous une portion (18) du plancher (10) située à cheval sur les parties avant et arrière (4;8), lesdits éléments (16) étant dimensionnés pour présenter une plus grande résistance à la déformation, en cas de choc latéral, sur la partie avant (4) que sur la partie arrière (8).

2. Véhicule (2) selon la revendication 1, **caractérisé en ce qu'**il comprend deux longerons intermédiaires (14) disposés longitudinalement sous le plancher (10) entre les deux longerons latéraux (12), les éléments de renfort (16) étant disposés entre les longerons latéraux (12) et les longerons intermédiaires (14).

3. Véhicule (2) selon la revendication 2, **caractérisé en ce qu'**il comprend des traverses (20) disposées transversalement sous le plancher (10) entre les longerons intermédiaires (14) sur la portion (18) du plancher située à cheval sur les parties avant et arrière (4 ;8).

4. Véhicule (2) selon l'une des revendications 1 à 3, **caractérisé en ce que** les éléments de renfort (16) présentent un profil général en forme de gousset.

5. Véhicule (2) selon l'une des revendications 1 à 4, **caractérisé en ce que** les éléments de renfort (16) comprennent plusieurs éléments distincts disposés, latéralement, de chaque côté du plancher (10) et fixés aux longerons latéraux (12).

6. Véhicule (2) selon la revendication 5, **caractérisé en ce que** les éléments de renfort (16) disposés sur la partie arrière (4) sont généralement plans et les éléments de renfort (16) disposés sur la partie (4) avant forment des caissons.

7. Véhicule (2) selon l'une des revendications 5 et 6, **caractérisé en ce que** les éléments de renfort (16) sont au nombre de quatre, ou plus, latéralement de chaque côté du plancher (10), la raideur en compression lors d'un choc latéral de chacun de ces éléments augmentant progressivement suivant une direction longitudinale orientée de la partie arrière (8) vers la partie avant (4).

8. Véhicule (2) selon la revendication 7, **caractérisé en ce qu'**au moins deux des au moins quatre éléments de renfort (16) latéralement de chaque côté du plancher (10) sont situés sur la partie avant (4) et au moins deux autres desdits au moins quatre éléments de renfort (16) sont situés sur la partie arrière (8).

9. Véhicule (2) selon la revendication 3 et selon l'une des revendications 5 à 8, **caractérisé en ce que** les traverses (20) sont situées, longitudinalement, au niveau des éléments de renfort (16).

10. Véhicule (2) selon l'une des revendications 1 à 9, **caractérisé en ce que** la portion (18) du plancher (10) comprenant les éléments de renfort (16) s'étend longitudinalement sur une distance comprise entre 200 et 800mm, préférentiellement entre 300 et 700mm, plus préférentiellement entre 400 et 700mm, sur chacune des parties avant et arrière (4;8).

## Patentansprüche

1. Nutzfahrzeug (2) mit :
- einem Vorderteil (4) mit einem Fahrerhaus (6);
- einen hinteren Ladeteil (8);
- einen Boden (10) und zwei Seitenschweller (12), wobei sich die beiden Seitenschweller (12) jeweils auf einer separaten Seite des Bodens (10) befinden, wobei sich der Boden und die Schweller in Längsrichtung entlang der vorderen und hinteren Abschnitte (4; 8) erstrecken;
**dadurch gekennzeichnet, dass** das Fahrzeug (2) ferner umfasst:
- Elemente (16) zur Verstärkung des Bodens (10) und der Schweller (12) im Falle eines Seitenaufpralls, wobei diese Elemente (16) quer unter einem Abschnitt (18) des Bodens (10) angeordnet sind, der den vorderen und hinteren Teil (4; 8) überspannt, wobei diese Elemente (16) so dimensioniert sind, dass sie im Falle eines Seitenaufpralls einen größeren Verformungswiderstand auf dem vorderen Teil (4) als auf dem hinteren Teil (8) aufweisen.

2. Fahrzeug (2) nach Anspruch 1, **dadurch gekennzeichnet, dass** es zwei Zwischenschweller (14) aufweist, die in Längsrichtung unter dem Boden (10) zwischen den beiden Seitenschwellern (12) angeordnet sind, wobei die Verstärkungselemente (16) zwischen den Seitenschwellern (12) und den Zwischenschwellern (14) angeordnet sind.

3. Fahrzeug (2) nach Anspruch 2, **dadurch gekennzeichnet, dass** es Querträger (20) aufweist, die quer unter dem Boden (10) zwischen den Zwischenschwellen (14) auf dem Abschnitt (18) des Bodens angeordnet sind, der den vorderen und hinteren Teil (4; 8) überspannt.

4. Fahrzeug (2) nach einem der Ansprüche 1 bis 3, **dadurch gekennzeichnet, dass** die Verstärkungselemente (16) ein allgemein zwickelartiges Profil aufweisen.

5. Fahrzeug (2) nach einem der Ansprüche 1 bis 4, **dadurch gekennzeichnet, dass** die Verstärkungselemente (16) eine Vielzahl von separaten Elementen umfassen, die seitlich auf beiden Seiten des Bodens (10) angeordnet und an den Seitenschwellern (12) befestigt sind.

6. Fahrzeug (2) nach Anspruch 5, **dadurch gekennzeichnet, dass** die Verstärkungselemente (16), die am hinteren Teil (4) angeordnet sind, im Allgemeinen flach sind und die Verstärkungselemente (16), die am vorderen Teil (4) angeordnet sind, Kisten bilden.

7. Fahrzeug (2) nach einem der Ansprüche 5 und 6, **dadurch gekennzeichnet, dass** die Verstärkungselemente (16) seitlich auf jeder Seite des Bodens (10) vier oder mehr an der Zahl sind, wobei die Drucksteifigkeit bei einem Seitenaufprall jedes dieser Elemente in Längsrichtung vom hinteren Teil (8) zum vorderen Teil (4) progressiv zunimmt.

8. Fahrzeug (2) nach Anspruch 7, **dadurch gekennzeichnet, dass** mindestens zwei der mindestens vier Verstärkungselemente (16) seitlich auf jeder Seite des Bodens (10) auf dem vorderen Abschnitt (4) angeordnet sind und mindestens zwei weitere der mindestens vier Verstärkungselemente (16) auf dem hinteren Abschnitt (8) angeordnet sind.

9. Fahrzeug (2) nach Anspruch 3 und nach einem der Ansprüche 5 bis 8, **dadurch gekennzeichnet, dass** die Querträger (20) in Längsrichtung auf der Höhe der Verstärkungselemente (16) angeordnet sind.

10. Fahrzeug (2) nach einem der Ansprüche 1 bis 9, **dadurch gekennzeichnet, dass** sich der Abschnitt (18) des Bodens (10), der die Verstärkungselemente (16) umfasst, in Längsrichtung über eine Strecke zwischen 200 und 800 mm, vorzugsweise zwischen 300 und 700 mm, besonders bevorzugt zwischen 400 und 700 mm, auf jedem der vorderen und hinteren Teile (4; 8) erstreckt.

## Claims

1. Utility vehicle (2) comprising :
- a front part (4) with a cab (6);
- a rear loading part (8);
- a floor (10) and two side sills (12), the two side sills (12) each being on a separate side of the floor (10), said floor and said sills extending longitudinally along the front and rear portions (4;8) ;
**characterised in that** the vehicle (2) further comprises:
- reinforcing elements (16) for reinforcing the floor (10) and the sills (12) in the event of a side impact, said elements (16) being arranged transversely under a portion (18) of the floor (10) situated straddling the front and rear parts (4; 8), said elements (16) being dimensioned to have greater resistance to deformation, in the event of a side impact, on the front part (4) than on the rear part (8).

2. Vehicle (2) according to claim 1, **characterised in that** it comprises two intermediate sills (14) disposed longitudinally under the floor (10) between the two side sills (12), the reinforcing elements (16) being disposed between the side sills (12) and the intermediate sills (14).

3. Vehicle (2) according to claim 2, **characterized in that** it comprises crossmembers (20) arranged transversely under the floor (10) between the intermediate sills (14) on the portion (18) of the floor straddling the front and rear parts (4; 8).

4. Vehicle (2) according to one of claims 1 to 3, **characterized in that** the reinforcing elements (16) have a general gusset-shaped profile.

5. Vehicle (2) according to one of claims 1 to 4, **characterised in that** the reinforcing elements (16) comprise a plurality of separate elements arranged laterally on either side of the floor (10) and attached to the side sills (12).

6. Vehicle (2) according to claim 5, **characterized in that** the reinforcing elements (16) arranged on the rear part (4) are generally flat and the reinforcing elements (16) arranged on the front part (4) form boxes.

7. A vehicle (2) according to one of claims 5 and 6, **characterized in that** the reinforcing elements (16) are four or more in number laterally on each side of the floor (10), the compressive stiffness upon a side impact of each of these elements increasing progressively in a longitudinal direction from the rear portion (8) to the front portion (4).

8. A vehicle (2) according to claim 7, **characterised in that** at least two of the at least four reinforcing elements (16) laterally on each side of the floor (10) are located on the front portion (4) and at least two others of said at least four reinforcing elements (16) are located on the rear portion (8).

9. Vehicle (2) according to claim 3 and according to one of claims 5 to 8, **characterised in that** the crossmembers (20) are located longitudinally at the level of the reinforcing elements (16).

10. Vehicle (2) according to one of claims 1 to 9, **characterised in that** the portion (18) of the floor (10) comprising the reinforcing elements (16) extends longitudinally over a distance of between 200 and 800 mm, preferably between 300 and 700 mm, more preferably between 400 and 700 mm, on each of the front and rear parts (4; 8).
